# FASCICULE DE BREVET EUROPEEN

(11) **EP 0 525 462 B1**
(45) Date de publication et mention de la délivrance du brevet: **20.12.1995**
(21) Numéro de dépôt: 92111669.5
(22) Date de dépôt: 09.07.1992
(51) Int. Cl.: H02K 21/16, H02K 21/18

(54) **Transducteur électromagnétique polyphasé à aimant permanent, notamment moteur d'entraînement**
Mehrphasiger, elektromagnetischer Wandler mit Dauermagnet, insbesondere Antriebsmotor
Multi-phase electromagnetic transducer with permanent magnet, in particular driving motor

(30) Priorité: 22.07.1991 FR 9109330
(43) Date de publication de la demande: 03.02.1993
(73) Titulaire: Eta SA Fabriques d'Ebauches, 2540 Granges (CH)
(72) Inventeur: Taghezout, Daho, CH-1006 Lausanne (CH)
(74) Mandataire: de Raemy, Jacques

(56) Documents cités:
- EP-A- 0 116 378
- WO-A-89/02670
- FR-A- 2 503 952
- GB-A- 112 926
- GB-A- 263 287
- PATENT ABSTRACTS OF JAPAN vol. 12, no. 310 (E-648)(3157) 23 Août 1988 & JP-A-63 077 368

## Description

La présente invention concerne un transducteur électromécanique du type électromagnétique, polyphasé et comportant un rotor à aimant permanent. Ce transducteur peut être utilisé comme moteur ou comme génératrice. Plus particulièrement, la présente invention concerne un moteur électromagnétique comportant au moins trois phases, chacune de ces phases pouvant alimenter le moteur alternativement ou simultanément suivant le mode de fonctionnement choisi. Ce moteur est destiné notamment à entraîner un mécanisme de petite dimension, par exemple un mécanisme horloger.

Il est connu de la demande de brevet EP 0 458 056 un moteur électromagnétique triphasé comportant un rotor à aimant permanent de préférence bipolaire et un stator pourvu d'une part, d'une partie statorique périphérique formant un circuit magnétique de faible réluctance magnétique et d'autre part, d'une partie statorique centrale conformée pour recevoir le rotor, cette partie statorique centrale étant entourée par la partie statorique périphérique. Trois bobines montées sur trois branches relient la partie statorique centrale à la partie statorique périphérique. La partie statorique centrale présente trois pôles comprenant chacun un épanouissement polaire entourant partiellement le trou statorique, les épanouissements polaires étant séparés les uns des autres par des isthmes de haute réluctance magnétique. Le stator présente une structure plane située dans un seul et même plan, les trois branches comportant les trois bobines d'alimentation en flux magnétique étant situées dans un second plan parallèle au plan du stator et voisin de ce plan.

Ce moteur triphasé du type étoile présente l'avantage de fournir un couple moyen non-nul en alimentation successive des phases (séquence une phase "ON"). Cependant, il a le désavantage d'avoir une partie statorique périphérique pour le retour du flux magnétique. Cette structure nécessite un étalement du stator qui rend ce moteur relativement encombrant.

Un des buts de la présente invention est de pallier l'inconvénient de ce moteur, tout en conservant les avantages d'alimentation et de rendement élevé qu'il présente. Un autre but de l'invention est d'améliorer encore le rendement de ce moteur triphasé du type étoile en augmentant le couplage magnétique entre le rotor et les bobines d'alimentation en flux magnétique. Finalement, on cherche à atteindre ces buts tout en maintenant un coût de construction relativement faible, c'est-à-dire en réalisant un moteur électromagnétique de construction simple et d'assemblage aisé.

La présente invention a donc pour objet un transducteur électromagnétique polyphasé, notamment un moteur comprenant :
- un stator comportant des première et deuxième parties principales, la première partie principale définissant d'une part un trou statorique et d'autre part au moins trois pôles magnétiques, chacun de ces pôles magnétiques comprenant à une extrémité un épanouissement polaire définissant partiellement ledit trou statorique et à l'autre extrémité une oreille polaire servant de contact magnétique, lesdits épanouissements polaires étant séparés l'un de l'autre par des zones à haute réluctance magnétique, ledit stator comportant encore au moins trois branches de guidage du flux magnétique, chacune de ces branches reliant magnétiquement une oreille polaire différente de ladite première partie statorique principale avec ladite deuxième partie statorique principale de manière à former au moins trois circuits magnétiques associés respectivement auxdits trois pôles magnétiques;
- un rotor monté rotatif dans ledit trou statorique et comportant au moins un aimant permanent, ce rotor étant susceptible de tourillonner pour délivrer un couple moteur à un mécanisme à entraîner;
- au moins deux bobines montées respectivement sur deux desdites branches de guidage du flux magnétique, chaque bobine étant destinée à être reliée à une alimentation électrique pour engendrer un flux magnétique dans la branche à laquelle elle est associée;
   ce transducteur étant caractérisé en ce que lesdites première et deuxième parties statoriques principales sont situées essentiellement dans deux plans statoriques parallèles différents, chacune desdites branches de guidage du flux magnétique portant une desdites bobines étant située dans une région intermédiaire auxdits plans statoriques.

Dans un mode de réalisation préféré de l'invention, les deux parties statoriques principales ont une forme entièrement plane, la deuxième partie statorique étant située essentiellement dans une région superposée à la région sensiblement circulaire définie par la première partie statorique principale. De même, les branches de guidage du flux magnétique, situées dans un plan intermédiaire aux deux plans des parties statoriques principales, ont aussi une forme plane. De plus, une réalisation particulière de ce mode de réalisation préféré présente une forme semblable pour les deux parties statoriques principales, le rotor comportant deux aimants permanents bipolaires, ces deux aimants étant associés aux pôles magnétiques de l'une et de l'autre des deux parties statoriques principales.

Il résulte de ces caractéristiques un transducteur polyphasé qui comme moteur est capable de fournir un couple moyen non-nul en alimentation successive des phases, ce transducteur ayant en plus une structure compacte. Le stator s'étend dans le mode de réalisation préféré essentiellement sur trois plans parallèles voisins et toutes les pièces statoriques ont une forme plane ne présentant aucune difficulté de découpage, ce qui occasionne des coûts de production relativement faibles. Si préalablement le rotor est logé par exemple dans une petite cage, l'assemblage du moteur selon l'invention se fait aisément. Finalement, la réalisation particulière du mode de réalisation préféré avec deux aimants permanents bipolaires permet d'obtenir un très bon rendement du transducteur selon l'invention, le couplage magnétique aimants-bobines étant alors considérablement augmenté pour un même encombrement et sans pour autant augmenter le diamètre du rotor.

L'invention sera mieux comprise à l'aide de la description qui va suivre et des dessins qui l'illustrent uniquement à titre d'exemple. Sur ces dessins :
- la figure 1 représente une vue en plan d'un premier mode de réalisation d'un moteur triphasé selon l'invention;
- les figures 2 et 3 sont des vues en coupe du moteur selon les lignes II-II et III-III de la figure 1;
- les figures 4 et 5 sont des vues en coupe du moteur selon les lignes IV-IV et V-V de la figure 3;
- les figures 6 et 7 sont des vues en plan d'une première, respectivement seconde variante du premier mode de réalisation décrit à la figure 1;
- la figure 8 représente une vue en plan d'un deuxième mode de réalisation d'un moteur triphasé selon l'invention;
- la figure 9 est une vue en coupe agrandie de la région du rotor du moteur de la figure 8;
- les figures 10 et 11 représentent une première, respectivement deuxième variante d'un mode de réalisation d'un moteur pentaphasé selon l'invention.

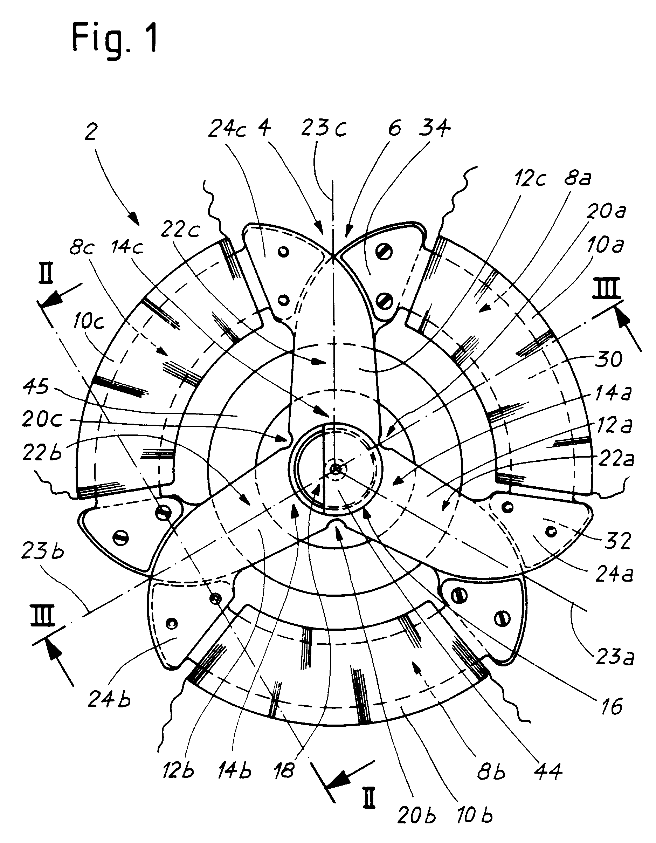

En se référant aux figures 1 à 5, on décrira ci-après à titre d'exemple d'un transducteur selon l'invention un premier mode de réalisation d'un moteur électromagnétique, ce moteur étant du type triphasé symétrique.

Le stator 2 de ce moteur triphasé possède essentiellement une structure sur trois plans parallèles voisins. Dans les deux plans extérieurs sont situées une première, respectivement une deuxième partie statorique principale 4 et 6. Ces deux parties statoriques principales 4 et 6 sont formées chacune d'une seule et même pièce superposée l'une à l'autre et sont reliées magnétiquement au moyen de branches 8a, 8b, 8c de section rectangulaire servant de moyen de guidage du flux magnétique entre ces deux parties statoriques principales 4 et 6. Sur chacune de ces branches 8a, 8b, 8c est prévue une bobine 10a, 10b, 10c destinée à être reliée à une alimentation électrique pour engendrer un flux magnétique dans la branche à laquelle elle est associée.

La première partie statorique principale 4 présente une forme d'hélice. Elle est formée essentiellement par trois pôles magnétiques 12a, 12b, 12c. Chacun de ces pôles magnétiques 12a, 12b, 12c comprend un épanouissement polaire 14a, 14b, 14c situé dans la région centrale du stator, chacun de ces épanouissements polaires définissant partiellement un trou statorique 16 prévu pour le rotor 18. Ces trois épanouissements polaires 14a, 14b, 14c sont connectés l'un à l'autre par des isthmes 20a, 20b, 20c définissant des zones à haute réluctance magnétique.

Chaque épanouissement polaire 14a, 14b, 14c est prolongé par un bras polaire 22a, 22b, 22c s'étendant radialement au trou statorique 16. Les trois bras polaires 22a, 22b, 22c sont disposés de manière régulière autour du trou statorique 16. Finalement, chaque bras polaire 22a, 22b, 22c est terminé par une oreille polaire 24a, 24b, 24c s'étendant de manière oblique relativement à la direction radiale donnée par la droite radiale 23a, 23b, 23c définie par la médiane des deux isthmes 20a et 20b, respectivement 20b et 20c, 20c et 20a définissant l'épanouissement polaire du pôle magnétique en question.

On remarquera que les trois pôles magnétiques 12a, 12b, 12c sont recourbées dans le même sens et ont une forme identique, ces pôles étant décalés angulairement l'un par rapport à l'autre d'un angle de 120°.

La deuxième partie statorique principale 6 est de forme identique à la première partie statorique principale 4. Cependant, cette deuxième partie statorique principale 6 est disposée de manière inversée ou retournée par rapport à la première partie statorique principale 4. Cette deuxième partie statorique principale 6 est disposée de telle manière que les épanouissements polaires de ses trois pôles magnétiques soient exactement superposés aux épanouissements polaires correspondant de la première partie statorique principale 4. Ainsi, le bras polaire et l'oreille polaire d'un pôle de cette deuxième partie statorique principale 6 sont disposés symétriquement par rapport au bras polaire et à l'oreille polaire correspondants du pôle magnétique de la première partie statorique 4, l'axe de symétrie étant donné par la droite radiale 23a, 23b, 23c. L'oreille polaire de chacun des deux pôles magnétiques superposés appartenant à la première, respectivement deuxième partie statorique principale 4 et 6 sont situées essentiellement d'un côté et de l'autre de la droite radiale 23a, 23b, 23c.

Chaque branche 8a, 8b, 8c de guidage du flux magnétique est formée d'un noyau 30 et d'une première, respectivement deuxième oreille de liaison 32 et 34. Chacune de ces branches 8a, 8b, 8c a une forme plane et est située dans le plan intermédiaire aux première et deuxième parties statoriques 4 et 6. Chacune de ces branches 8a, 8b, 8c de guidage du flux magnétique est incurvée de telle manière que la première oreille de liaison 32 soit superposée à l'oreille polaire 24a, respectivement 24b, 24c d'un premier pôle magnétique 12a, respectivement 12b, 12c appartenant à la première partie statorique principale 4 et que simultanément la seconde oreille de liaison 34 de cette branche de guidage du flux magnétique soit superposée à l'oreille polaire d'un second pôle de la deuxième partie statorique principale 6, ce second pôle étant décalé de 120° par rapport audit premier pôle et incurvé du côté de ce premier pôle. Chaque oreille de liaison 32, 34 est formée de telle manière que la surface de superposition avec l'oreille polaire correspondante soit située entièrement dans la région de non-superposition du pôle auquel appartient cette oreille et du pôle de l'autre partie statorique principale qui lui fait face. Ainsi, chaque pôle magnétique appartenant à la première partie statorique 4 est découplé magnétiquement du pôle magnétique de la deuxième partie statorique principale 6 qui lui fait face. De plus, il résulte des caractéristiques décrites ci-avant que chaque oreille de liaison 32, 34 est située entièrement d'un seul côté de la droite radiale 23a, 23b, 23c définie par les bras polaires 22a, 22b,22c. On remarquera encore que chacune des bobines 10a, 10b, 10c du moteur est disposé sur un arc de cercle de même centre et rayon.

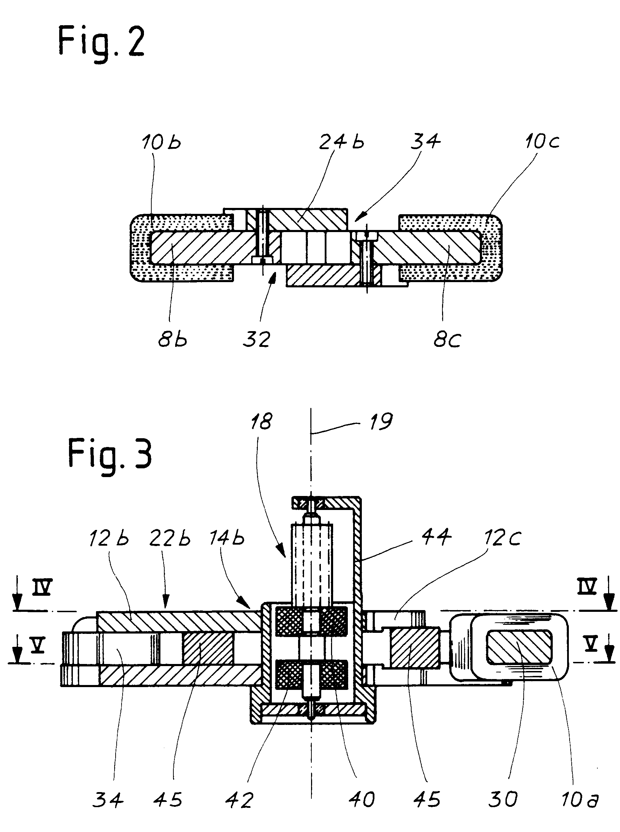

Comme le montrent les figures 3 à 5, le rotor 18 est susceptible de tourillonner autour de l'axe de rotation 19 perpendiculaire au plan général du stator et comporte deux aimants permanents 40, 42 dont les directions de magnétisation sont décalées angulairement de 60°. Ce rotor 18 est placé dans une cage 44 servant essentiellement à le positionner correctement et de manière fiable au sein des deux parties statoriques principales 4, 6 et à faciliter l'assemblage du moteur.

Afin de rigidifier l'ensemble du moteur et de bloquer dans une position fixe la première partie statorique principale 4 relativement à la deuxième partie statorique principale 6, il est prévu une entretoise amagnétique 45 placée entre la première et la deuxième partie statorique principale 4 et 6, cette entretoise étant formée par une seule pièce au milieu de laquelle est prévue une ouverture pour le rotor 18 et la cage 44. Cette entretoise 45 a la forme d'un anneau de structure plane dans lequel 3 rainures de positionnement sont prévues de chaque côté. Chaque rainure correspond au profil du bras polaire qui s'insère dedans. Finalement, la matière utilisée pour cette entretoise 45 aura avantageusement des propriétés élastiques pour que chaque oreille de liaison 32, 34 puisse être fixée correctement à l'oreille polaire correspondante 24a, 24b, 24c de la première, respectivement de la deuxième partie statorique principale 4 et 6.

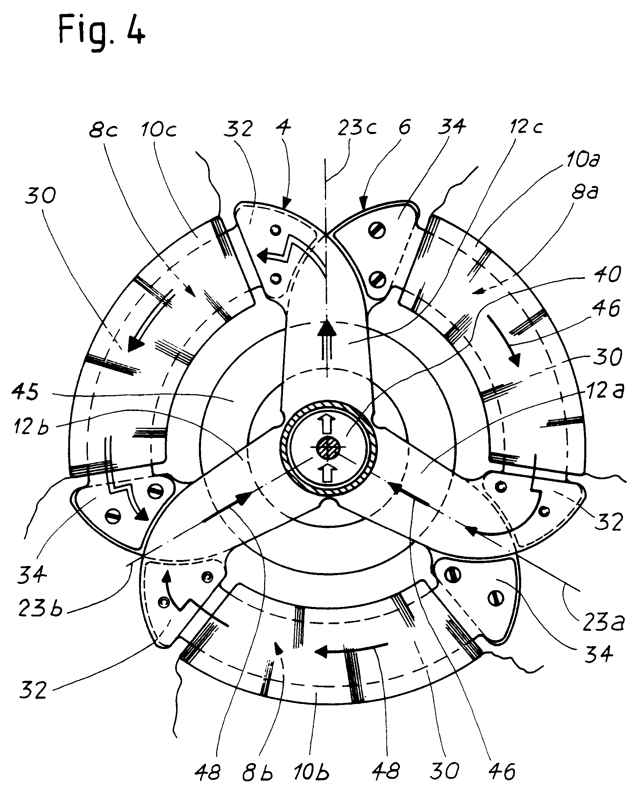

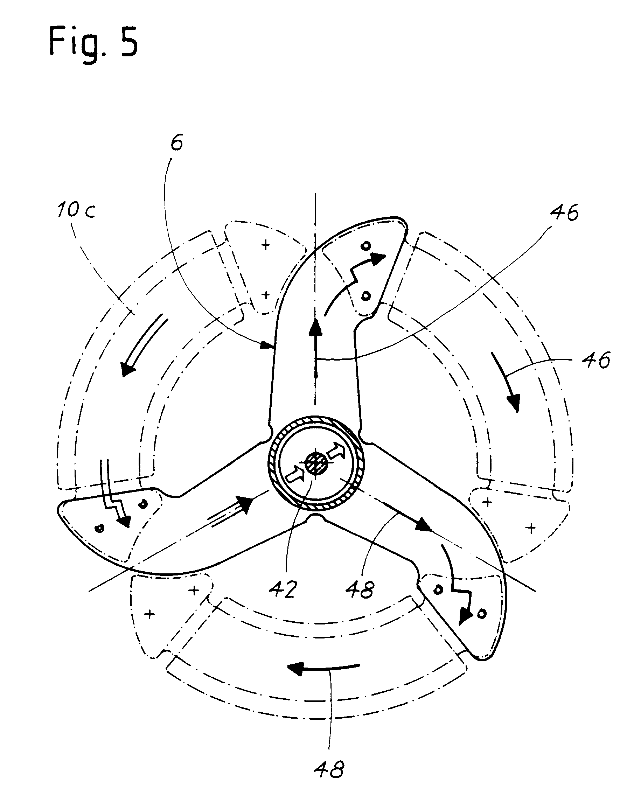

En se référant plus spécialement aux figures 4 et 5, on décrira ci-après le fonctionnement de ce premier mode de réalisation du moteur triphasé décrit ci-avant.

Chaque circuit magnétique du moteur comprend une seule branche 8a, respectivement 8b, 8c de guidage du flux magnétique sur laquelle est située une bobine 10a, respectivement 10b, 10c capable d'engendrer un flux magnétique dans le noyau 30 de cette branche. Ensuite, chacune de ces branches 8a, respectivement 8b, 8c de guidage du flux magnétique est associée à seulement deux circuits magnétiques 46, 48 tels que décrits par les flèches sur les figures 4 et 5. Finalement, chacun de ces circuits magnétiques comprend deux pôles magnétiques appartenant à la première partie statorique principale 4 et deux pôles magnétiques appartenant à la deuxième partie principale statorique 6.

Le flux engendré par une bobine 10a, respectivement 10b, 10c dans le noyau 30 d'une branche 8a, respectivement 8b, 8c de guidage du flux magnétique associée à un premier pôle magnétique appartenant à la première partie statorique 4 et à un deuxième pôle magnétique appartenant à la deuxième partie statorique 6 permet d'engendrer un flux magnétique de densité sensiblement égale dans les deux circuits magnétiques auxquels cette bobine est associée. Sur les figures 4 et 5, on a représenté par les flèches 46, respectivement 48 les deux circuits magnétiques associés à la bobine 10c. Les flèches doubles signifient un tronçon commun aux deux circuits magnétiques; une flèche présentant un décrochement vers l'extérieur du moteur signifie que le circuit passe sur un plan supérieur par rapport au plan du dessin, alors qu'un décrochement de la flèche vers l'intérieur signifie que le circuit passe sur un plan inférieur.

On remarquera que l'aimant permanent situé dans le plan de la première partie statorique principale 4 est orienté relativement à l'aimant permanent 42 situé dans le plan de la deuxième partie statorique principale 6 de telle manière que lorsque la direction de polarisation de l'aimant permanent 40 est alignée sur la direction d'un premier pôle magnétique 12a, respectivement 12b, 12c de la première partie statorique principale 4, la direction de polarisation de l'aimant permanent 42 soit alignée dans le sens inverse sur le pôle magnétique, de la deuxième partie statorique principale 6, qui est relié par une branche 8a, respectivement 8b, 8c de guidage du flux magnétique audit premier pôle magnétique. Dans le cas du moteur triphasé de la figure 1, le décalage angulaire résultant entre les deux directions de polarisation des aimants permanents 40 et 42 vaut 60°.

On notera qu'un tel moteur peut fonctionner en mode pas à pas ou en mode de rotation continue. Suivant le type d'alimentation, le mode pas à pas fonctionne par exemple avec 3, 6 ou 12 pas par tour. Il est naturellement possible de prévoir des encoches de positionnement pour le mode pas à pas.

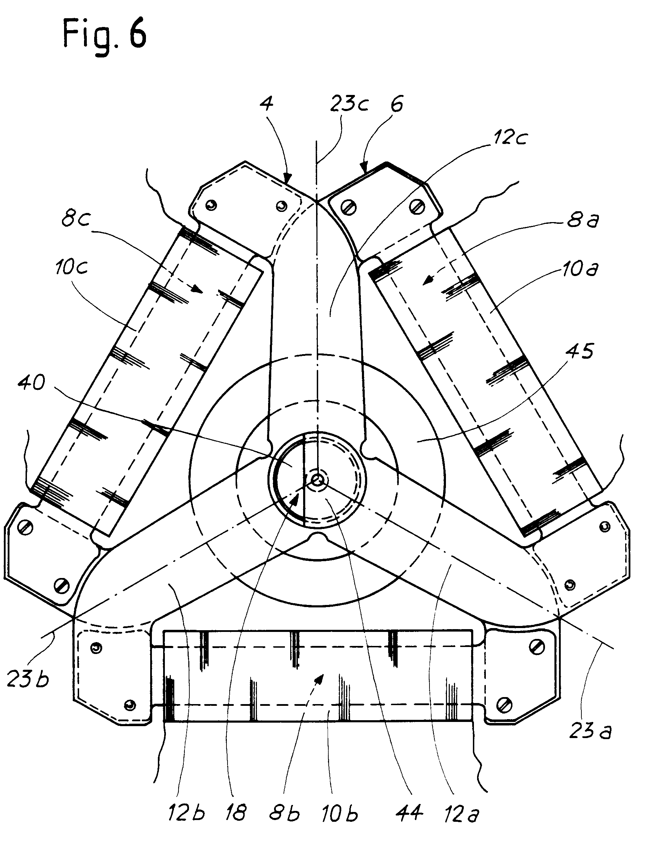

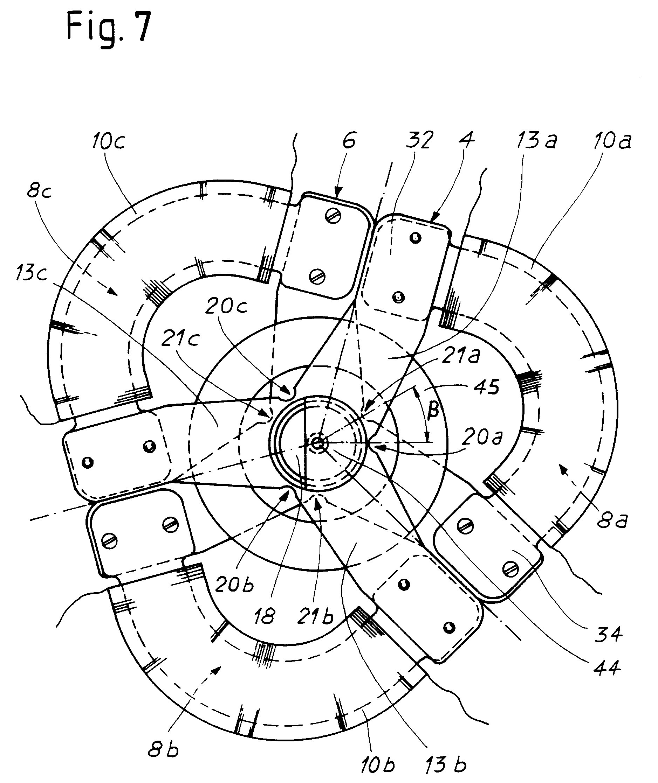

Les figures 6 et 7 sont deux variantes du premier mode de réalisation d'un moteur triphasé selon l'invention décrit ci-avant. La figure 6 se distingue de la figure 1 essentiellement par le fait que les bobines 10a, 10b, 10c sont rectilignes. La figure 7 présente la particularité d'un décalage angulaire β entre les isthmes 20a, 20b, 20c de la première partie statorique principale 4 et les isthmes 21a, 21b, 21c de la deuxième partie statorique principale 6. Les pôles 13a, 13b, 13c ont une forme sensiblement rectiligne et les oreilles de liaison 32, 34 ont avantageusement une forme sensiblement rectangulaire tout en présentant la caractéristique essentielle de non-superposition entre les oreilles polaires de la première partie statorique et les oreilles polaires de la deuxième partie statorique. Dans cette variante, la direction de magnétisation du deuxième aimant permanent 42 relativement à la direction de magnétisation du premier aimant permanent 40 est décalée angulairement d'un angle de 180° - (120-β)° = (60+β)°.

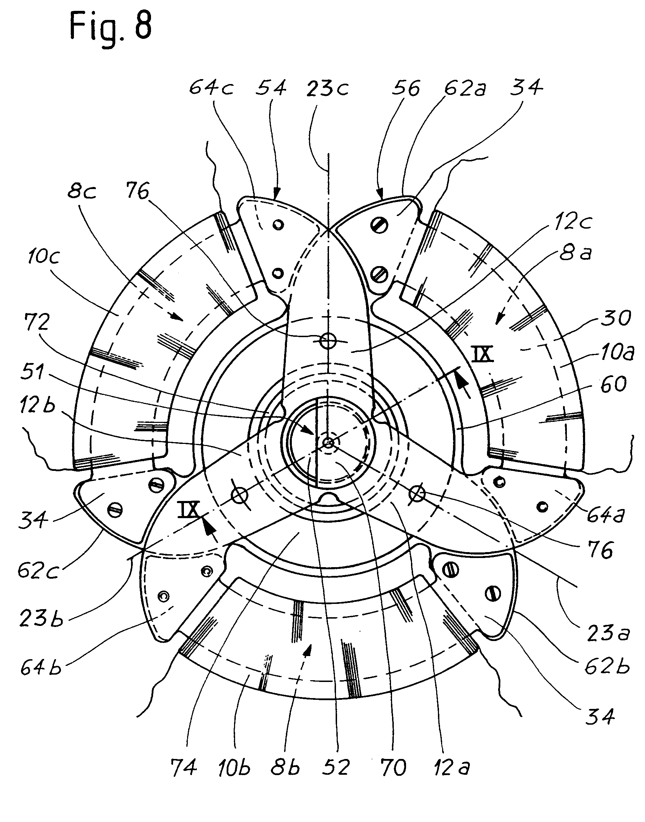

En se référant à la figure 8, on décrira ci-après un deuxième mode de réalisation d'un moteur triphasé selon l'invention.

Dans ce deuxième mode de réalisation, le rotor 51 ne comporte plus qu'un seul aimant permanent bipolaire 52 situé dans le plan de la première partie statorique principale 54. Comme dans le premier mode de réalisation décrit ci-avant, ce moteur triphasé possède essentiellement une structure sur trois plans parallèles voisins. Dans les deux plans extérieurs sont situées une première, respectivement une deuxième partie statorique principale 54 et 56. La première partie statorique 54 ainsi que les branches de guidage du flux magnétique 8a, 8b, 8c sont identiques au premier mode de réalisation décrit ci-avant. Par contre, la deuxième partie statorique principale 56 présente une forme différente de la première partie statorique principale 54. Cette deuxième partie statorique principale 56 est formée essentiellement par un anneau 60 de forme circulaire et de structure plane, ainsi que de trois bras 62a, 62b, 62c ayant sensiblement la forme d'un arc de cercle. L'extrémité de chacun de ces bras 62a, 62b, 62c forme une oreille de fixation profilée pour être reliée à la seconde oreille 64a, respectivement 64b, 64c d'une des branches 8a, 8b, 8c de guidage du flux magnétique. De manière équivalente au premier mode de réalisation, la seconde oreille de liaison 34, fixée sur l'oreille du bras 62a, respectivement 62b, 62c est située entièrement du même côté de la droite radiale 23c, respectivement 23a, 23b définie par le pôle 12c, respectivement 12a, 12b appartenant à la première partie statorique principale 54.

La deuxième partie statorique principale 56 de ce mode de réalisation est formée d'une seule et même pièce de faible réluctance magnétique. Ainsi, le flux magnétique peut s'écouler librement d'un bras 62a, 62b, 62c à un autre bras de cette pièce. Cette deuxième partie statorique principale 56 sert donc essentiellement à former les circuits magnétiques du moteur.

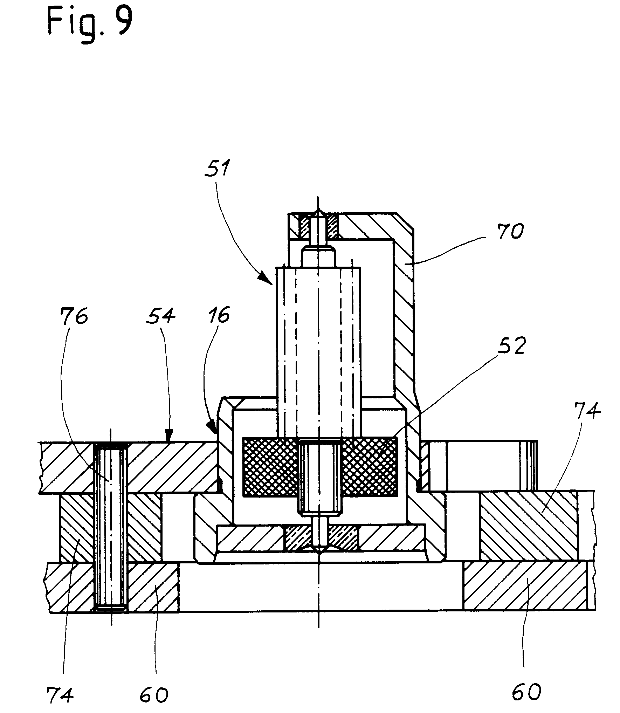

Sur la figure 9 est décrit l'agencement de la cage rotorique 70 au sein du moteur. On remarquera que l'ouverture 72 définie par la partie annulaire 60 de la deuxième partie statorique principale 56 et par l'entretoise 74 servant à rigidifier le moteur à été prévue avec un diamètre supérieur au diamètre maximum de la cage rotorique 70. Afin de positionner l'entretoise 74 et de fixer les deux parties statoriques principales 54 et 56, il a été prévu des goupilles de positionnement 76.

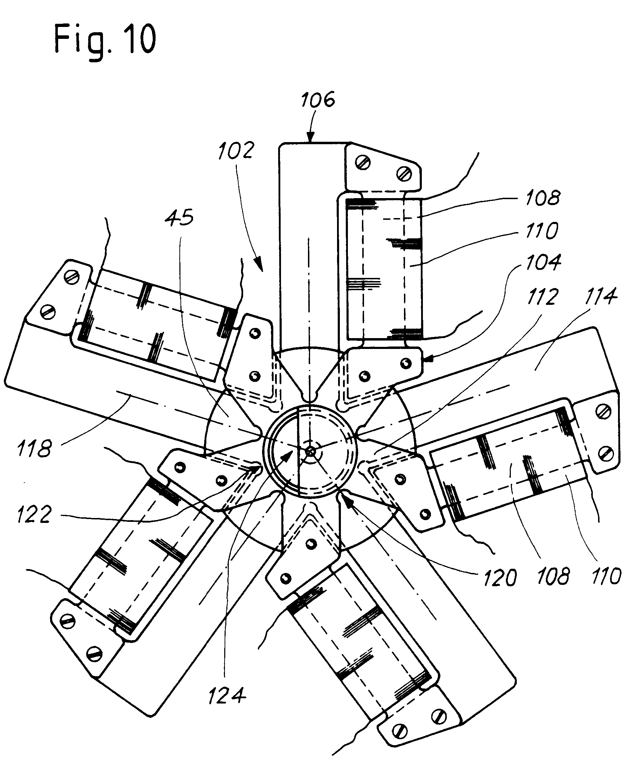

En se référant à la figure 10, on décrira ci-après un troisième mode de réalisation d'un moteur électromagnétique selon l'invention.

Le moteur décrit par cette figure 10 est une version pentaphasée du moteur électromagnétique selon l'invention. Le stator 102 de ce moteur pentaphasé possède essentiellement une structure sur trois plans parallèles voisins. Comme pour les autres modes de réalisations, ce moteur comprend deux parties statoriques principales 104 et 106 et des branches 108 servant de moyen de guidage du flux magnétique entre les deux parties statoriques principales 104 et 106. Sur chacune de ces branches 108 est prévue une bobine 110 destinée à être reliée à une alimentation électrique pour engendrer un flux magnétique dans la branche à laquelle elle est associée.

Chacune des deux parties statoriques principales 104 et 106 est formée d'une seule et même pièce plane. Les branches 108 de guidage du flux magnétique intermédiaire aux deux parties statoriques principales 104 et 106 sont elles-mêmes aussi de forme plane.

Dans ce mode de réalisation, les bras 112 de la première partie statorique 104 sont de forme différente de celle des bras 114 de la deuxième partie statorique principale 106. Les branches 108 de guidage du flux magnétique sont disposées parallèlement à la droite radiale 118 définie par le bras polaire 114 de la deuxième partie statorique principale 106. De manière avantageuse, les isthmes 120 de la première partie statorique principale 104 sont décalées angulairement d'un angle de 36° par rapport aux isthmes 122 de la deuxième partie statorique principale 106. Cependant, le décalage angulaire entre les isthmes 120 de la première partie statorique 104 et les isthmes 122 de la deuxième partie statorique 106 peut varier d'un angle compris entre 0 et 72° dans d'autres variantes de ce mode de réalisation d'un moteur pentaphasé selon l'invention.

Dans ce mode de réalisation, le rotor 124 comprend deux aimants permanents dont la direction de magnétisation est décalée angulairement d'un angle de 144°. De manière générale, si le décalage angulaire entre les isthmes 120 de la première partie statorique 104 et les isthmes 122 de la deuxième partie statorique 106 est égal à α°, le décalage angulaire entre le premier et le deuxième aimant permanent bipolaire du rotor 124 est égale à (180 - α)°.

On notera qu'il est possible de réaliser un mode de réalisation d'un moteur pentaphasé selon l'invention qui soit équivalent au deuxième mode de réalisation du moteur triphasé selon l'invention décrite ci-avant. Dans ce cas, le rotor comprendra un seul aimant permanent.

Le fonctionnement de ce mode de réalisation d'un moteur pentaphasé est semblable au fonctionnement du mode de réalisation précédent.

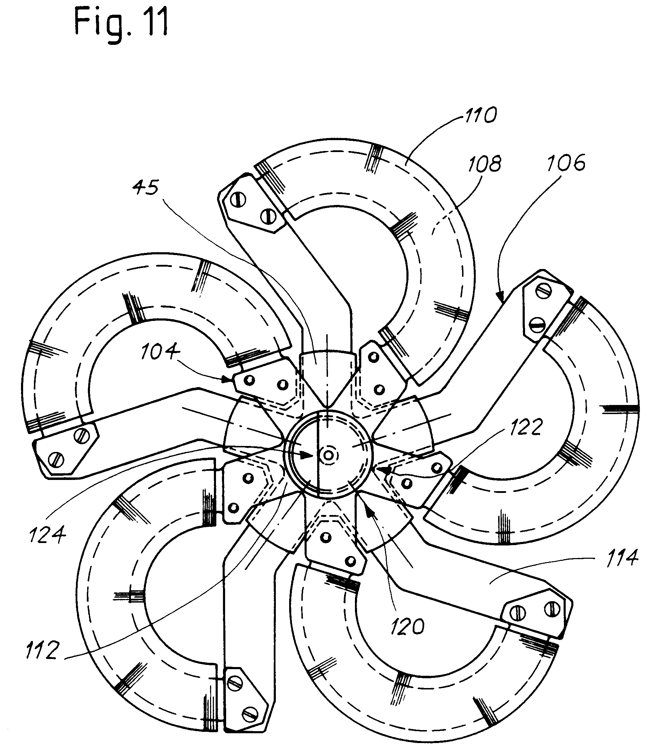

Sur la figure 11 est présenté une variante du troisième mode de réalisation décrit ci-avant. Dans cette variante, la configuration donnée permet une optimalisation de la longueur des bobines par rapport à l'encombrement total.

On notera qu'il est possible de construire sur le principe de l'invention des moteurs biphasés avec deux pièces statoriques principales présentant une forme de croix. On notera encore que le moteur selon l'invention peut avoir un nombre de phases supérieur à 5, car rien n'empêche d'augmenter le nombre de bras de chaque pièce statorique principale, ainsi que le nombre de bobines nécessaire à l'alimentation du moteur.

Enfin, bien que dans la description qui précède, on n'ait décrit que des modes de réalisation portant sur un moteur, il est bien entendu que l'invention s'applique également à d'autres types de transducteurs tels que les génératrices par exemple.

## Revendications

1. Transducteur électromagnétique polyphasée, notamment moteur d'entraînement comprenant :
- un stator (2) comportant des première et deuxième parties principales (4, 6; 54, 56; 104, 106), la première partie statorique principale (4; 54; 104) définissant d'une part un trou statorique (16) et d'autre part au moins trois pôles magnétiques (12a, 12b, 12c; 13a, 13b, 13c; 112), chacun de ces pôles magnétiques comprenant à une extrémité un épanouissement polaire (14a, 14b, 14c) définissant partiellement ledit trou statorique (16) et à l'autre extrémité une oreille polaire (24a, 24b, 24c) servant de contact magnétique, lesdits épanouissements polaires étant séparés l'un de l'autre par des zones à haute réluctance magnétique (20a, 20b, 20c), ledit stator comportant encore au moins trois branches (8a, 8b, 8c; 108) de guidage du flux magnétique, chacune de ces branches reliant magnétiquement une oreille polaire différente (24a, 24b, 24c) de ladite première partie statorique principale (4; 54; 104) avec ladite deuxième partie statorique principale (6; 56; 106) de manière à former au moins trois circuits magnétiques associés respectivement auxdits trois pôles magnétiques.
- un rotor (18; 51; 124) monté rotatif dans ledit trou statorique (16) et comportant au moins un aimant permanent (40; 52), ce rotor étant susceptible de tourillonner pour délivrer un couple moteur à un mécanisme à entraîner;
- au moins deux bobines (10a, 10b, 10c; 110) montées respectivement sur deux desdites branches (8a, 8b, 8c; 108) de guidage du flux magnétique, chaque bobine étant destinée à être reliée à une alimentation électrique pour engendrer un flux magnétique dans la branche à laquelle elle est associée;
ce transducteur étant caractérisé en ce que lesdites première et deuxième parties statoriques principales (4, 6; 54, 56; 104, 106) sont situées essentiellement dans deux plans statoriques (IV-IV, V-V) parallèles différents, chacune desdites branches de guidage du flux magnétique portant une desdites bobines étant située dans une région intermédiaire auxdits plans statoriques.

2. Transducteur selon la revendication 1, caractérisé en ce que lesdites parties statoriques principales (4, 6; 54, 56; 104, 106) sont parallèles et entièrement planes.

3. Transducteur selon la revendication 1 ou 2, caractérisé en ce que lesdites branches (8a, 8b, 8c; 108) de guidage du flux magnétique ont une section rectangulaire et sont situées essentiellement dans un seul et même plan.

4. Transducteur selon l'une quelconque des revendications 1 à 3, caractérisé en ce que chacune des deux parties statoriques principales (4, 6; 54, 56; 104, 106) est formée d'une seule et même pièce.

5. Transducteur selon l'une quelconque des revendications 1 à 4, caractérisé en ce que chacune desdites branches (8a, 8b, 8c; 108) de guidage du flux magnétique comprend un noyau (30) et deux oreilles de liaison (32, 34), chacune de ces oreilles de liaison étant superposée seulement à une seule des deux parties statoriques principales (4, 6; 54, 56; 104, 106).

6. Transducteur selon l'une quelconque des revendications 1 à 5, caractérisé en ce qu'il comprend une entretoise (45, 74) située dans ladite région intermédiaire aux deux parties statoriques principales (4, 6; 54, 56; 104, 106) et positionnée par des rainures de positionnement, prévues à la surface de cette entretoise, dans lesquelles sont insérés lesdits bras polaires (22a, 22b, 22c).

7. Transducteur selon l'une quelconque des revendications 1 à 6, caractérisé en ce que ledit rotor (18; 51; 124) est placé dans une cage rotorique (44; 70) insérée dans ledit trou statorique (16).

8. Transducteur selon l'une quelconque des revendications 1 à 7, caractérisé en ce lesdites bobines (10a, 10b, 10c; 110) sont disposées sur des arcs de mêmes centre et rayon.

9. Transducteur selon l'une quelconque des revendications 1 à 8, caractérisé en ce que ledit rotor (18; 124) comporte des premier et second aimants permanents bipolaires (40 et 42), le second aimant étant situé dans le plan statorique de ladite deuxième partie statorique (6; 106), et en ce que cette dernière est formée par des pôles magnétiques disposés autour d'un trou statorique aligné sur le trou statorique (16) de la première partie statorique principale (4; 104), le nombre de ces pôles étant égal au nombre de pôles magnétiques (12a, 12b, 12c; 13a, 13b, 13c; 112) de ladite première partie statorique principale (4; 104), chaque branche (8a, 8b, 8c; 108) de guidage du flux magnétique reliant un seul pôle de la première partie statorique principale (4; 104) avec un seul pôle de la deuxième partie statorique principale (6; 106).

10. Transducteur selon la revendication 9, caractérisé en ce que ladite deuxième partie statorique principale (6) est de forme identique à la première partie statorique principale (4) et disposée de manière inversée par rapport à celle-ci.

11. Transducteur selon la revendication 9 ou 10, caractérisé en ce que les pôles magnétiques (12a, 12b, 12c; 13a, 13b, 13c; 112) des première et deuxième parties statoriques principales (4, 6; 104, 106) sont disposés régulièrement autour des deux trous statoriques (16) et en ce que le décalage angulaire de la direction de polarisation dudit premier aimant (40) relativement à celle dudit second aimant (42) est sensiblement égal à (180 - α)°, α étant la valeur du décalage angulaire entre deux pôles magnétiques reliés magnétiquement par une branche (8a, 8b, 8c; 108) de guidage du flux magnétique portant une desdites bobines (10a, 10b, 10c; 110).

12. Transducteur selon l'une quelconque des revendications 1 à 8, caractérisé en ce que le rotor (51) comporte un seul aimant permanent bipolaire (52) situé dans le plan de la première partie statorique principale (54) et en ce que la deuxième partie statorique principale (56) est formée d'un anneau (60) centré sensiblement sur l'axe du rotor (19) et d'au moins trois bras (62a, 62b, 62c) terminés chacun par une oreille de fixation servant de contact magnétique avec une oreille de liaison (34) appartenant à une desdites branches (8a, 8b, 8c) de guidage du flux magnétique.

13. Transducteur selon l'une quelconque des revendications 1 à 12, caractérisé en ce qu'il comprend trois phases.

14. Transducteur selon l'une quelconque des revendications 1 à 12, caractérisé en ce qu'il comprend cinq phases.

## Patentansprüche

1. Elektromagnetischer mehrphasiger Wandler, insbesondere Antriebsmotor, umfassend:
- einen Stator (2) mit einer ersten und einer zweiten Hauptpartie (4, 6; 54, 56; 104, 106), wobei die erste Statorhauptpartie (4; 54; 104) einerseits ein Statorloch (16) begrenzt und andererseits mindestens drei Magnetpole (12a, 12b, 12c; 13a, 13b, 13c; 112), wobei jeder dieser Magnetpole an einem Ende eine Polfläche (14a, 14b, 14c) aufweist, welche teilweise das Statorloch (16) begrenzt und am anderen Ende ein Polauge (24a, 24b, 24c) aufweist, das als magnetischer Kontakt dient, wobei die Polflächen voneinander durch Zonen mit hoher magnetischer Reluktanz (20a, 20b, 20c) getrennt sind, welcher Stator ferner mindestens drei Zweige (8a, 8b, 8c; 108) für das Führen des Magnetflusses umfaßt, wobei jeder dieser Zweige magnetisch ein unterschiedliches Polauge (24a, 24b, 24c) der ersten Statorhauptpartie (4; 54; 104) mit der zweiten Statorhauptpartie (6; 56; 106) derart verbindet, daß mindestens drei magnetische Kreise, zugeordnet den drei Magnetpolen, gebildet werden;
- einen Rotor (18; 51; 124), der drehbeweglich in dem Statorloch (16) montiert ist und mindestens einen Permanentmagneten (40; 52) umfaßt, welcher Rotor zum Umlauf bringbar ist, um ein Motormoment auf einen anzutreibenden Mechanismus abzugeben;
- mindestens zwei Spulen (10a, 10b, 10c; 110), die auf zwei der Zweige (8a, 8b, 8c; 108) für das Führen des Magnetflusses montiert sind, wobei jede Spule dazu bestimmt ist, mit einer elektrischen Speisequelle verbunden zu werden, um einen Magnetfluß in dem Zweig, dem sie zugeordnet ist, zu erzeugen,
welcher Wandler dadurch gekennzeichnet ist, daß die erste und die zweite Statorhauptpartie (4, 6; 54, 56; 104, 106) sich im wesentlichen in zwei unterschiedlichen parallelen Statorebenen (IV-IV, V-V) befinden, wobei jeder der Zweige für die Führung des Magnetflusses, der eine der genannten Spulen trägt, sich in einer Zwischenregion bezüglich der Statorebenen befindet.

2. Wandler nach Anspruch 1, dadurch gekennzeichnet, daß die Hauptstatorpartien (4, 6; 54, 56; 104, 106) parallel und vollständig eben sind.

3. Wandler nach Anspruch 1 oder 2, dadurch gekennzeichnet, daß die Zweige (8a, 8b, 8c; 108) für das Führen des Magnetflusses einen rechteckigen Querschnitt aufweisen und sich im wesentlichen in ein- und derselben Ebene befinden.

4. Wandler nach einem der Ansprüche 1 bis 3, dadurch gekennzeichnet, daß jede der beiden Statorhauptpartien (4, 6; 54, 56; 104, 106) aus ein- und demselben Teil gebildet ist.

5. Wandler nach einem der Ansprüche 1 bis 4, dadurch gekennzeichnet, daß jeder der Zweige (8a, 8b, 8c; 108) für das Führen des Magnetflusses einen Kern (30) und zwei Verbindungsaugen (32, 34) umfaßt, wobei jedes dieser Verbindungsaugen nur einem einzigen der beiden Statorhauptpartien (4, 6; 54, 56; 104, 106) überlagert ist.

6. Wandler nach einem der Ansprüche 1 bis 5, dadurch gekennzeichnet, daß er ein Distanzstück (45, 74) umfaßt, das in der genannten Zwischenregion bezüglich der beiden Statorhauptpartien (4, 6; 54, 56; 104, 106) angeordnet ist und durch Positioniernuten, vorgesehen auf der Oberfläche des Distanzstücks, positioniert ist, in die die Polzweige (22a, 22b, 22c) eingefügt sind.

7. Wandler nach einem der Ansprüche 1 bis 6, dadurch gekennzeichnet, daß der Rotor (18; 51; 124) in einem Rotorkäfig (44; 70) plaziert ist, der in das Statorloch (16) eingefügt ist.

8. Wandler nach einem der Ansprüche 1 bis 7, dadurch gekennzeichnet, daß die Spulen (10a, 10b, 10c; 110) auf Kreisbögen gleichen Zentrums und Radius' angeordnet sind.

9. Wandler nach einem der Ansprüche 1 bis 8, dadurch gekennzeichnet, daß der Rotor (18; 124) einen ersten und einen zweiten bipolaren Permanentmagneten (40 und 42) umfaßt, wobei der zweite Magnet in der Statorebene der zweiten Statorhauptpartie (6; 106) angeordnet ist und daß diese letztere von Magnetpolen gebildet ist, die um ein Statorloch herum angeordnet sind, das ausgefluchtet ist mit dem Statorloch (16) der ersten Statorhauptpartie (4; 104), wobei die Anzahl dieser Pole gleich ist der Anzahl der Magnetpole (12a, 12b, 12c; 13a, 13b, 13c; 112) der ersten Statorhauptpartie (4; 104), wobei jeder Zweig (8a, 8b, 8c; 108) für die Führung des Magnetflusses einen einzigen Pol der ersten Statorhauptpartie (4; 104) mit einem einzigen Pol der zweiten Statorhauptpartie (6; 106) verbindet.

10. Wandler nach Anspruch 9, dadurch gekennzeichnet, daß die zweite Statorhauptpartie (6) von identischer Form wie die erste Statorhauptpartie (4) ist und umgekehrt bezüglich der letzteren angeordnet ist.

11. Wandler nach Anspruch 9 oder 10, dadurch gekennzeichnet, daß die Magnetpole (12a, 12b, 12c; 13a, 13b, 13c; 112) der ersten und der zweiten Statorhauptpartie (4; 6; 104, 106) regelmäßig um zwei Statorlöcher (16) verteilt angeordnet sind und daß der Winkelversatz der Polarisationsrichtung des ersten Magneten (40) relativ zu jenem des zweiten Magneten (42) im wesentlichen gleich (180 - α)° ist, wobei α der Wert des Winkelversatzes zwischen zwei Magnetpolen ist, welche magnetisch durch einen Zweig (8a, 8b, 8c; 108) für das Führen des Magnetflusses, der eine der Spulen (10a, 10b, 10c; 110) trägt, verbunden sind.

12. Wandler nach einem der Ansprüche 1 bis 8, dadurch gekennzeichnet, daß der Rotor (51) einen einzigen bipolaren Permanentmagneten (52) umfaßt, der sich in der Ebene der ersten Statorhauptpartie (54) befindet, und daß die zweite Statorhauptpartie (56) von einem Ring (60) gebildet ist, der im wesentlichen auf die Achse des Rotors (19) zentriert ist, und von mindestens drei Armen (62a, 62b, 62c), jeweils abgeschlossen durch ein Befestigungsauge, das dem magnetischen Kontakt mit einem Verbindungsauge (34) dient, ausgehend von einem der Zweige (8a, 8b, 8c) für das Führen des Magnetflusses.

13. Wandler nach einem der Ansprüche 1 bis 12, dadurch gekennzeichnet, daß er drei Phasen umfaßt.

14. Wandler nach einem der Ansprüche 1 bis 12, dadurch gekennzeichnet, daß er fünf Phasen umfaßt.

## Claims

1. Polyphase electromagnetic transducer, in particular a drive motor comprising :
- a stator (2) including first and second principal parts (4, 6; 54, 56; 104, 106), the first principal stator part (4; 54; 104) defining, on the one hand, a stator hole (16) and, on the other hand, at least three magnetic poles (12a, 12b, 12c; 13a, 13b, 13c; 112) each of such magnetic poles comprising a polar expansion (14a, 14b, 14c) at one end partially defining said stator hole (16) and a polar lug (24a, 24b, 24c) at the other end serving as magnetic contact, said polar expansions being separated from one another by zones of high magnetic reluctance (20a, 20b, 20c), said stator further including at least three magnetic flux guidance branches (8a, 8b, 8c; 108) each of such branches magnetically coupling a different polar lug (24a, 24b, 24c) of said principal stator part (4; 54; 104) to said second principal stator part (6; 56; 106) so as to form at least three magnetic circuits associated respectively to said three magnetic poles;
- a rotor (18; 51; 124) rotatably mounted in said stator hole (16) and including at least one permanent magnet (40; 52), such rotor being adapted to spin in order to furnish a driving couple to a mechanism to be driven;
- at least two coils (10a, 10b, 10c; 110) mounted respectively on two of said magnetic flux guidance branches (8a, 8b, 8c; 108), each coil being intended for coupling to an electrical supply source so as to generatea magnetic flux in its associated branch;
such transducer being characterized in that said first and second principal stator parts (4, 6; 54, 56; 104, 106) are substantially situated in two different parallel stator planes (IV-IV, V-V), each of said magnetic flux guidance branches bearing one of said coils being situated in a region intermediate said stator planes.

2. Transducer according to claim 1, characterized in that said principal stator parts (4, 6; 54, 56; 104, 106) are parallel and have an essentially planar form.

3. Transducer according to claim 1 or 2, characterized in that said magnetic flux guidance branches (8a, 8b, 8c; 108) have a rectangular cross section and are substantially situated in a single common plane.

4. Transducer according to any one of claims 1 to 3, characterized in that each of the two principale stator parts (4, 6; 54, 56; 104, 106) is formed from a sole unique piece.

5. Transducer according to any one of claims 1 to 4, characterized in that each of said magnetic flux guidance branches (8a, 8b, 8c; 108) comprises a core (30) and two coupling lugs (32, 34), each of said coupling lugs being superposed solely over a single one of the two pincipale stator parts (4, 6; 54, 56; 104, 106).

6. Transducer according to any one of claims 1 to 5, characterized in that it comprises a spacer (45, 74) situated in said region intermediate the two principal stator parts (4, 6; 54, 56; 104, 106) and positioned by grooves provided on the surface of such spacer into which the polar arms (22a, 22b, 22c) are inserted.

7. Transducer according to any one of claims 1 to 6, characterized in that said rotor (18; 51; 124) is placed in a rotor cage (44; 70) inserted into said stator hole (16).

8. Transducer according to any one of claims 1 to 7, characterized in that said coils (10a, 10b, 10c; 110) are arranged on arcs having the same center and radius.

9. Transducer according to any one of claims 1 to 8, characterized in that said rotor (18; 124) includes first and second bipolar permanent magnets (40 and 42), the second magnet being situated in the stator plane of said second stator part (6; 106), and in that this latter is formed by magnetic poles arranged around a stator hole aligned with the stator hole (16) of the first principal stator part (4; 104), the number of such poles being equal to the number of magnetic poles (12a, 12b, 12c; 13a, 13b, 13c; 112) of said first principal stator part (4; 104), each meagnetic flux guidance branch (8a, 8b, 8c; 108)coupling a single pole of the first principal stator part (4; 104) to a single pole of the second principal stator part (6; 106).

10. Transducer according to claim 9, characterized in that said second principal stator part (6) is identical in form to said first principal stator part (4) and arranged in an inverted manner relative to the latter.

11. Transducer according to claim 9 or 10, characterized in that the magnetic poles (12a, 12b, 12c; 13a, 13b, 13c; 112) of the first and second principal stator parts (4, 6; 104, 106) are arranged at regular intervals around the two stator holes (16) and in that the angular shift in the polarization direction of said first magnet (40) relative to that of said second magnet (42) is substantially equal to (180 - α)°, α being the value of the angular shift between two magnetic poles magnetically coupled by a magnetic flux guidance branch (8a, 8b, 8c; 108) bearing one of said coils (10a, 10b, 10c; 110).

12. Transducer according to any one of claims 1 to 8, characterized in that the rotor (51) includes a single bipolar magnet (52) situated in the plane of the first principal stator part (54) and in that the second principal stator part (56) is formed from a ring (60) centered substantially on the rotor-axis (19) and at least three arms (62a, 62b, 62c) each terminating in a fastening lug serving as magnetic contact with a coupling lug (34) belonging to one of said magnetic flux guidance branches (8a, 8b, 8c).

13. Transducer according to any one of claims 1 to 12, characterized in that it comprises three phases.

14. Transducer according to any one of claims 1 to 13, characterized in that it comprises five phases.
